# DEMANDE DE BREVET EUROPEEN

(11) **EP 1 072 538 A1**
(43) Date de publication de la demande: **31.01.2001**
(21) Numéro de dépôt: 00402063.2
(22) Date de dépôt: 20.07.2000
(51) Int. Cl.: B65F 1/14

(54) **Procédé de récupération de déchets de verre et dispositif associé mettant en oeuvre des sacs souples**

(30) Priorité: 22.07.1999 FR 9909511
(71) Demandeur: Ecollect Sarl, 84303 Cavaillon Cedex (FR); Gayet, Alain, 92400 Courbevoie (FR)
(72) Inventeur: Alahelle, Jean-Marie, 84300 Cavaillon (FR); Gayet, Alain, 92400 Courbevoie (FR)

(57) **Abrégé**

Le domaine de l'invention est celui des conteneurs de déchets (6), en particulier ceux qui sont destinés à la récupération du verre, existants sur la voirie publique (0) ou enterrés (1).

Le procédé selon l'invention consiste fondamentalement, (i) à faire en sorte que les déchets soient réceptionnés dans des sacs souples (6) et que ceux-ci soient toujours suspendus à des crochets (29), l'un d'entre eux servant de peson, (ii) à faire en sorte que les sacs (6) soient contraints par des liaisons élastiques (10) solidaires d'un plancher (31) de façon à ce que la hauteur de chute des bouteilles soit minimisée, (iii) à faire en sorte de ne pas vider ces sacs (6) dans la rue, mais à les transporter jusqu'à l'usine de traitement, un sac vide (22) ayant remplacé un sac plein (6).

Le dispositif selon l'invention consiste fondamentalement, (i) à afficher le taux de remplissage de sacs souples (6), destinés à réceptionner les déchets, (ii) à l'utilisation d'une barrière de sécurité (7) associée à un plancher (31) autour de la fosse (1), (iii) à minimiser ou à faire disparaître la casse et le bruit dans la récupération des bouteilles de verre.

## Description

Le domaine de l'invention est celui des conteneurs de déchets, en particulier ceux qui sont destinés à la récupération du verre, existants sur la voirie publique ou enterrés. Plus précisément l'invention concerne un procédé et un dispositif permettant à une municipalité ou à une entreprise en ayant la concession, d'enterrer sous la voirie publique, les conteneurs récupérateurs de déchets, améliorant ainsi l'environnement et le confort des habitants voisins des lieux, mais aussi, concernant le verre, en améliorant, la rentabilité économique de la filière de récupération.

En effet, l'évolution incontournable du traitement écologique des déchets des consommateurs conduit les municipalités ou les entreprises en ayant la concession, à mettre en place les moyens d'un tri sélectif des déchets directement par le consommateur. Par ailleurs ce dernier, également citoyen, se tourne vers les pouvoirs publics, en exprimant de plus en plus une volonté de maîtrise de son environnement urbain, en particulier aux plans des nuisances visuelles, sonores, voire olfactives, ces exigences venant en supplément des contraintes de commodité d'accès, d'efficacité du service, sans renoncer évidemment aux exigences de sécurité.

Les déchetteries ayant montré leurs limites, le problème posé est de permettre à ces citoyens de disposer de manière facilement accessible, c'est-à-dire en de très nombreux lieux, de conteneurs multiples permettant la dépose sélective des déchets, en séparant dès cet instant, par exemple, le verre, les plastiques, les métaux et les matières putrescibles.

C'est ainsi que sont apparus les conteneurs spécialisés dans la collecte du verre. Cette multiplication des lieux de dépose induit immédiatement des conséquences négatives pour le public en termes de pollution visuelle, olfactive et sonore et pour les pouvoirs publics en termes de sécurité, problèmes aggravés en cas de terrorisme.

Par ailleurs, la procédure de ramassage de ces conteneurs de plusieurs mètres cubes consiste à déverser les tonnes de verre dans un important poids lourd muni d'un bras hydraulique. L'ouverture des trappes du conteneur entraîne la chute et le bris des bouteilles, le tout dans un niveau de bruit insupportable pour le voisinage.

La pression du voisinage sur les élus a généralement pour conclusion le déménagement dudit conteneur dans un autre quartier, d'où l'expression des "conteneurs baladeurs".

Au passage, on remarquera également une pollution olfactive due aux jus résiduels échappés des bouteilles. Celle-ci entraîne rapidement une fermentation des jus et a pour résultat le dégagement d'odeurs putrides.

Si on poursuit le cheminement du poids lourd rempli de verre, celui-ci arrive en zone de regroupement où celui-ci déverse son contenu sur une aire de béton. Il arrive fréquemment qu'un nouveau voyage soit entrepris, avec chargement à la pelleteuse pour un nouveau voyage et un nouveau déversement.

À chacune de ses manipulations un taux très important de casse du verre a été mis en oeuvre, conduisant, à l'arrivée, à la fourniture d'un calcin (verre brisé) de faible granulométrie, ou plus exactement possédant un taux de fines de verre très important, les fines de verre n'étant pas récupéré par les verriers. Or, il faut savoir que la valeur marchande de ce calcin va dépendre de sa composition. Dans le cas ci-dessus, il sera composé d'un mélange de verre blanc, vert et brun, accompagné d'un certain nombre d'ingrédients de type, liège, métal, plastique auxquels se sont joint, malgré toutes les consignes apposées sur les conteneurs, de la faïence, de la porcelaine, du grès, etc., ces derniers constituant autant de poisons, qui, s'ils sont présents au-delà d'un certain pourcentage, amenuisent considérablement la valeur marchande du calcin.

Il serait donc extrêmement utile à cet instant de trier le calcin. Hélas, cela n'est plus possible, sa granulométrie trop petite ne le permet plus, ni manuellement, ni par des procédures automatiques.

En fait, le problème posé ne peut être effectivement résolu que si on sait résoudre simultanément quatre problèmes, c'est-à-dire concevoir un procédé et des installations,
- commodes d'utilisation pour tout public, éliminant les nuisances crées par le bris des bouteilles, c'est-à-dire essentiellement le bruit et les odeurs des jus résiduels,
- surs, concernant le mobilier urbain, face aux problèmes de sécurité civile quotidiens ou exceptionnels, comme le terrorisme par exemple,
- économiques pour la municipalité ou ses concessionnaires, permettant de livrer à la filière verre, non pas un calcin proche de la poudre, mais des bouteilles pas ou peu cassées,
- faciles à mettre en oeuvre, car utilisant des équipements de transport existantsen possession de l'exploitant et prévenant ce dernier quand il doit intervenir.

Ces objectifs sont atteints et ces problèmes sont résolus selon l'invention à l'aide d'un procédé comprenant les étapes décrites ci-après et mettant en oeuvre les équipements ad hoc.
- Les conteneurs de verre sont enterrés, seul dépassant du sol l'organe d'introduction des déchets, de type trémie avec tiroir et / ou trou d'introduction des bouteilles. Il en résulte déjà, de ce fait, un matériel anti-feu et antiterrorisme, d'une part et d'autre part une sérieuse atténuation du bruit. Dans certains cas, ces conteneurs peuvent ne pas être enterrés.
- Les conteneurs sont des sacs souples, ressemblant à ceux qui servent au transport des gravats, du sable, des pavés, des engrais, etc. De plus ils peuvent, le cas échéant, être étanches afin de récupérer les jus résiduels des bouteilles, évitant ainsi leur accumulation dans la fosse.
- Dans tous les cas, les sacs souples sont suspendus, leurs sangles étant disposées dans des crochets de sécurité, l'un d'entre eux étant muni d'un dispositif de type peson ou balance romaine, permettant ainsi d'afficher, à l'extérieur, le taux de remplissage du conteneur.
- Pour le vidage, le bras de levage de l'engin de transport soulève l'ensemble constitué du plateau, d'une ou de plusieurs trémies et d'une structure, porteuse d'un ou de plusieurs sacs. Les sacs pleins sont déposés provisoirement sur le sol, afin de permettre à l'opérateur, conducteur de l'engin de transport, de décrocher les sangles de fixation des sacs de la structure porteuse. Il accroche alors sur la structure, un ou plusieurs sacs vides et remet l'ensemble en place.
- Pendant la période où le plateau a été retiré, la fosse ne peut rester béante pour des raisons évidentes de sécurité. Pour pallier ce problème, une barrière de sécurité, empêchant toute chute dans la fosse, est venue se positionner automatiquement. En fait des liaisons élastiques avec un plancher solidaire de cette barrière, les ont fait monter et sortir de la fosse au fur et à mesure où le plateau se levait. Au retour, cette barrière sert de dispositif de guidage de l'ensemble plateau, structure, sacs vides et s'enfonce au fur et à mesure de la descente de l'ensemble.
- L'opérateur ramène alors le bras de levage de l'engin de transport vers les sacs pleins, précédemment déposés sur le sol. Il accroche alors l'ensemble des sangles d'un sac à son crochet, puis dépose ce sac dans le l'engin de transport, sans le vider. Il fait de même pour l'autre sac, le cas échéant.
- L'engin de transport poursuit sa tournée, puis se rend au centre de regroupement ou de tri et décharge tous les sacs, sans les vider, donc sans casser de bouteilles supplémentaires. Ce n'est qu'au moment où le sac sera présenté sur la chaîne de tri, que ce dernier sera renversé ou éventré d'un coup de cutter, son contenu se répandant alors sur une aire adaptée, par exemple un tapis roulant en caoutchouc, les jus résiduels étant traités par gravité.
- En procédant ainsi, le matériel utilisé, poids lourds de transport équipé d'un bras de levage, est parfaitement standard, n'utilisant, entre autres, que le crochet de sécurité normalisé et obligatoire, à l'exclusion de tout dispositif type double crochet, crochet Kirschoffer, etc.

Le dispositif, selon l'invention, consiste donc fondamentalement,
(i) à l'utilisation de sacs souples spécifiques, suspendus à une structure porteuse, ce qui permet de disposer d'un indicateur de taux de remplissage,
(ii) à l'utilisation d'un plancher, tiré en permanence vers le haut, ce qui permet d'obtenir des bouteilles de verre peu cassées,
(iii) à l'utilisation d'une barrière de sécurité autour de la fosse, afin de se prémunir des chutes éventuelles.

Le procédé, selon l'invention, consiste donc fondamentalement
(i) à suspendre des sacs souples pour récupérer des déchets, disposant de ce fait d'une technique simple permettant la connaissance du taux de remplissage,
(ii) à contraindre lesdits sacs par un plancher tiré en permanence vers le haut, réduisant ainsi la hauteur de chute des bouteilles,
(iii) à ne pas vider ces sacs dans la rue, mais à les transporter jusqu'à l'usine de traitement, un sac vide ayant remplacé un sac plein.

Bien évidemment ce procédé et ce dispositif peuvent être mis en oeuvre pour d'autres type de déchets, comme des déchets lourds tel le papier, mais également pour n'importe quels autres déchets, comme les ordures ménagères, les plastiques, le métal, etc.

Dans ces différents cas, l'intérêt réside essentiellement dans le fait de n'avoir dans ce cas, qu'un seul type de matériel d'enlèvement des déchets. L'équipement nécessaire, consistant en un poids lourd équipé d'un bras de levage, est d'un prix très inférieur à celui d'une benne à compactage.

Bien que moins attractif dans le sens d'une diminution des nuisances, le procédé et le dispositif selon l'invention sont également susceptibles d'être mis en oeuvre et utilisés dans des abris posés sur le sol ou enterrés partiellement.

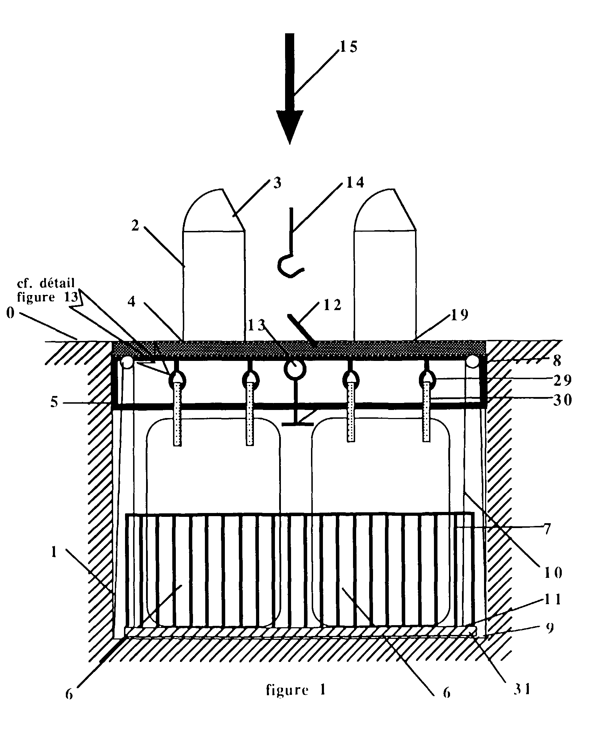

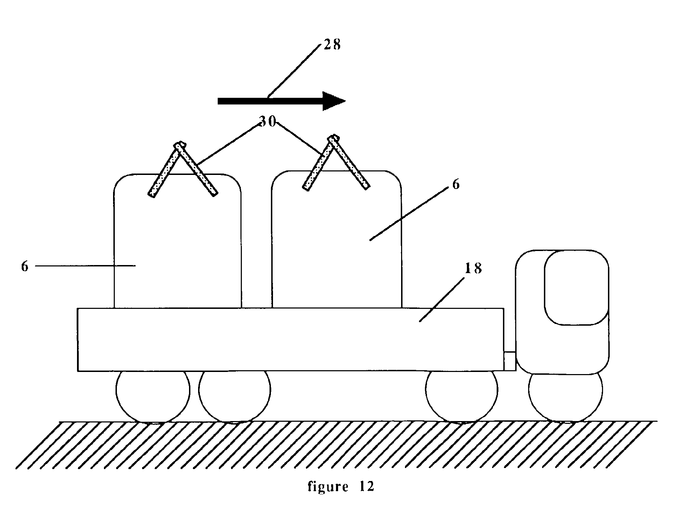

D'autres caractéristiques et avantages de l'invention apparaîtront à la lecture de la description d'une variante de réalisation de l'invention, donnée à titre d'exemple indicatif et non limitatif, et des figures 1 à 13, annexées, présentant des vues schématiques en coupe de la mise en oeuvre du procédé selon l'invention, dans le cas de la récupération des bouteilles de verre.

C'est ainsi que :
- la figure 1 montre, en coupe, le dispositif, avec deux sacs pleins ;
- la figure 2 montre, en coupe, le soulèvement de la structure, à mi-hauteur ;
- la figure 3 montre, en coupe, la structure en l'air ;
- la figure 4 montre, en coupe, le dépôt des sacs pleins sur le sol ;
- la figure 5 montre, en coupe, le décrochage manuel des sacs pleins ;
- la figure 6 montre, en coupe, l'accrochage des sacs vides ;
- la figure 7 montre, en coupe, la présentation de la structure au-dessus de la fosse ;
- la figure 8 montre, en coupe, la descente de la structure, à mi-hauteur ;
- la figure 9 montre, en coupe, le dispositif arrivé en position basse ;
- la figure 10 montre, en coupe, le dispositif, avec deux sacs partiellement pleins ;
- la figure 11 montre, en coupe, le chargement des sacs pleins dans le camion ;
- la figure 12 montre, en coupe, le déplacement du camion chargé des sacs pleins;
- la figure 13 montre, en coupe, un gros plan du système d'affichage du remplissage.

La mise en oeuvre du procédé selon l'invention permet au service ad hoc de la municipalité ou du concessionnaire, de disposer (figure 1) dans une fosse (1) un dispositif constitué d'une structure porteuse (5) à laquelle sont accrochés deux sacs souples (6) destinés à recevoir du verre.

Autour des sacs (6) est placée une barrière (7) dite de sécurité, solidaire d'un plancher (31) suspendu par des liaisons élastiques (10), tournant librement autour de poulies (8) et accrochées, d'une part, en (11) au plancher (31) et d'autre part, à la fosse (1) en un point (9), le plus bas possible.

Au niveau du sol (0) se trouve un plateau (4), solidaire de la structure porteuse (5), porteur de deux trémies (2) permettant la réception du verre dans des tiroirs (3) adaptés.

Le plateau (4) possède une petite trappe (12) permettant d'accéder à un simple anneau de manutention (13). Cet anneau de levage (13) est un simple anneau, possédant un degré de liberté dans le plan vertical limité par une butée (19).

Quand arrive l'instant de la collecte du verre, un engin de transport, munie d'un bras de levage équipé d'un crochet ordinaire, dit de sécurité (14), se présente. L'opérateur, généralement le conducteur du camion, effectue une descente (15) dudit crochet (14) pour venir saisir l'anneau de levage (13).

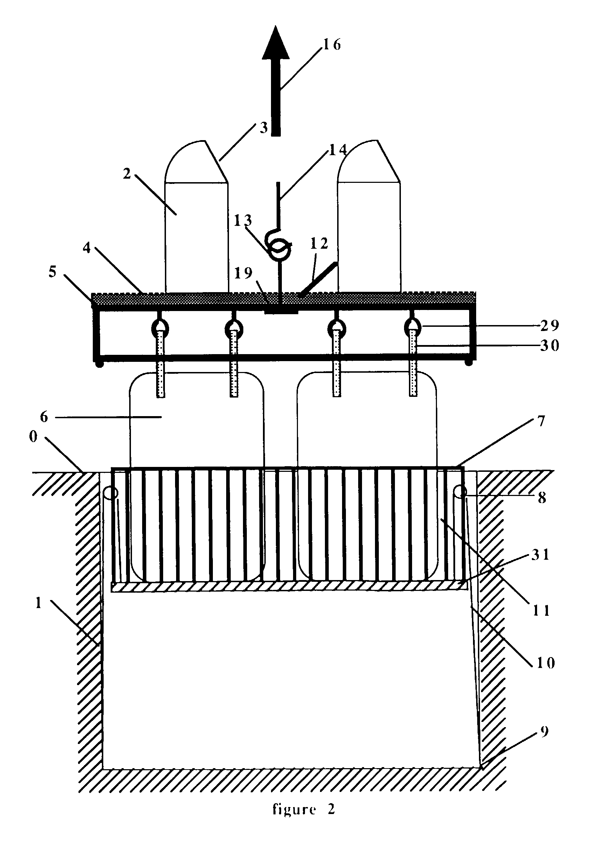

Après avoir accroché l'anneau (13) au crochet (14), le mouvement ascensionnel (16) s'amorce (figure 2) et se poursuit, le crochet (14) solidaire de l'anneau de levage (13) soulève alors le plateau (4), les trémies (2) et les tiroirs (3), ainsi que la structure porteuse (5) et les deux sacs pleins (6).

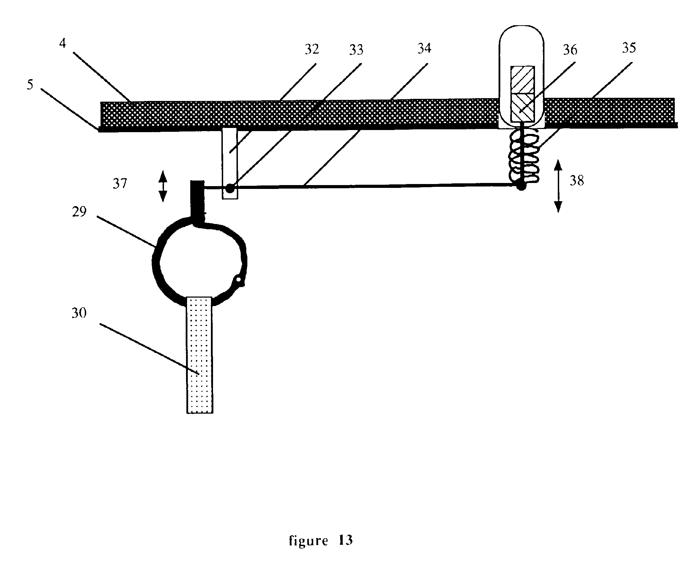

Les sacs pleins (6) sont accrochés par des sangles (30) à des crochets de sécurité ordinaires (29), solidaires de la structure porteuse (5). Pour chaque sac (6) un crochet de sécurité (29) servant de peson est particulier et sera décrit à la figure 13.

Tirés par les liaisons élastiques (10), le plancher (31) et la barrière de sécurité (7) s'élèvent à leur tour suivant le mouvement ascensionnel des sacs (6).

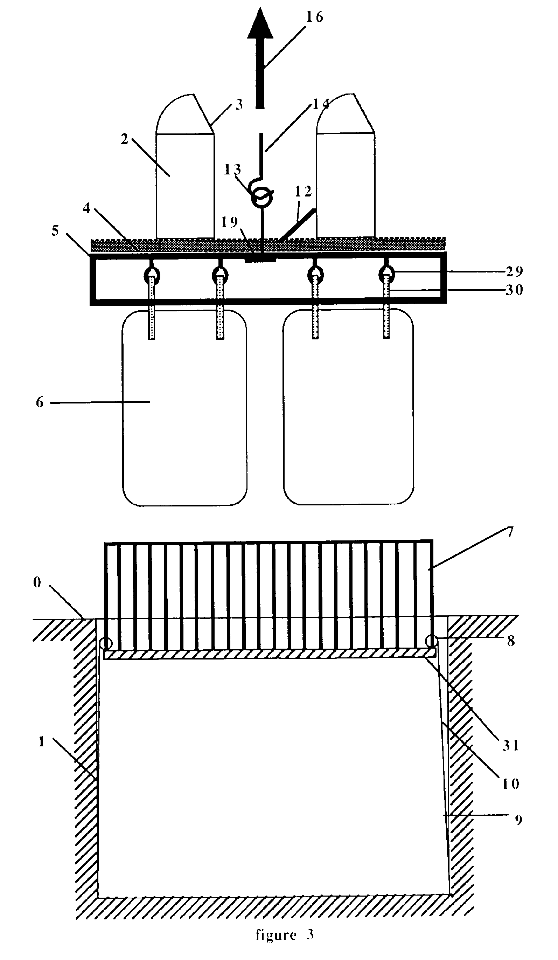

Arrivée en butée, le plancher (31) et la barrière de sécurité (7) cessent leur ascension (figure 3). La barrière de sécurité (7) et le plancher (32) protègent alors la fosse (1) située en dessous du sol (0) de toute chute.

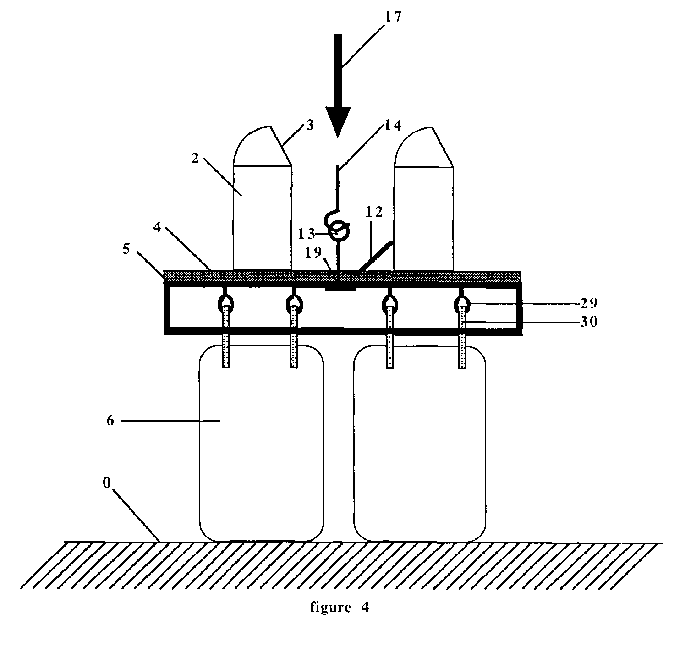

Le bras de levage du camion continue son ascension (16), puis descend (17) pour venir déposer (figure 4) l'ensemble sur le sol (0).

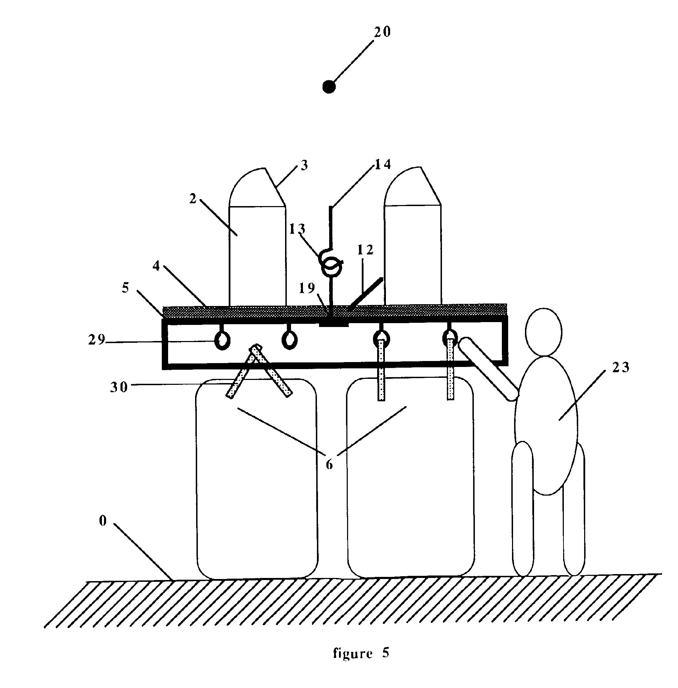

L'opérateur (23), généralement le conducteur du camion, (figure 5), décroche les sangles (30) des crochets de suspension (29), libérant ainsi les sacs pleins (6), qui restent sur le sol (0), le bras de levage du camion restant immobile (20).

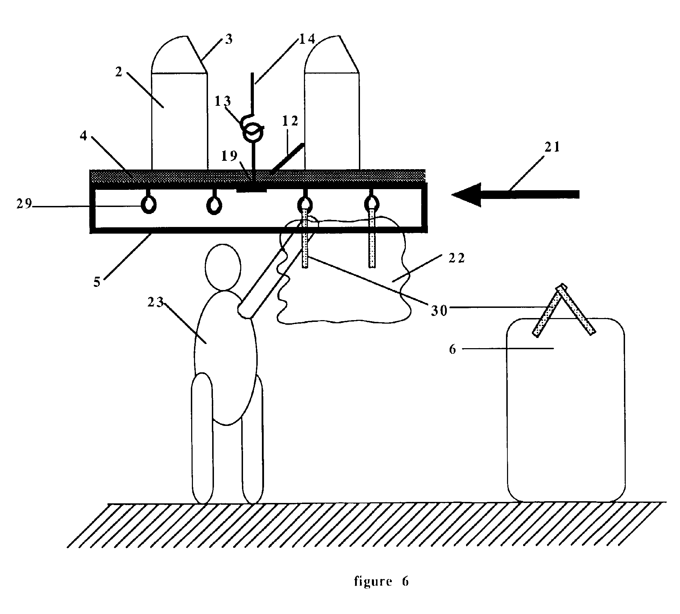

Ayant légèrement déplacé (21) le bras de levage du camion, l'opérateur (23) procède alors, (figure 6), à l'accrochage des sacs vides (22) en passant les sangles (30) dans les crochets de sécurité (29) solidaires de la structure porteuse (5).

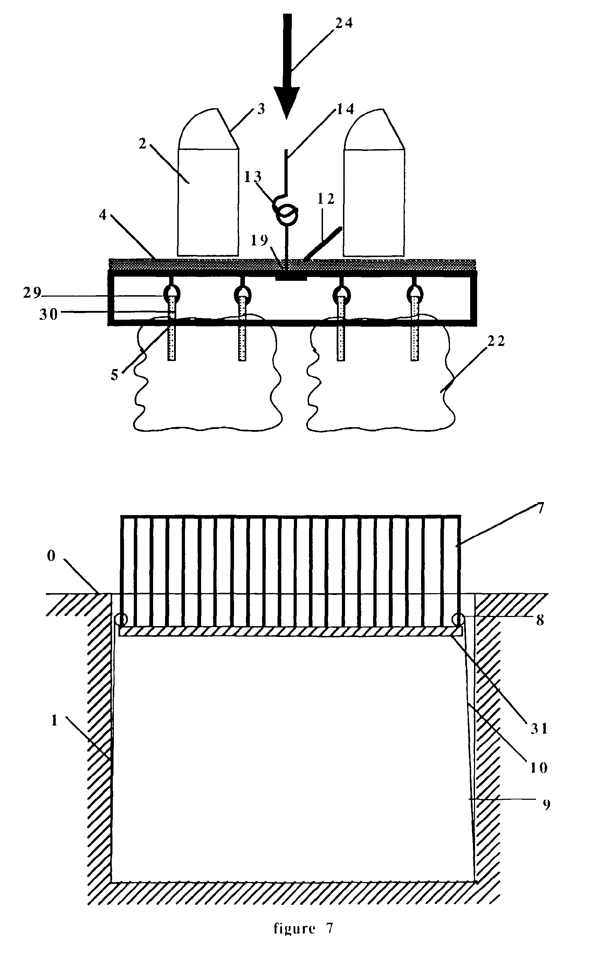

L'opération terminée (figure 7), l'ensemble est présenté au-dessus de la fosse (1), puis descendu (24) en direction de la barrière de sécurité (7), toujours en position haute.

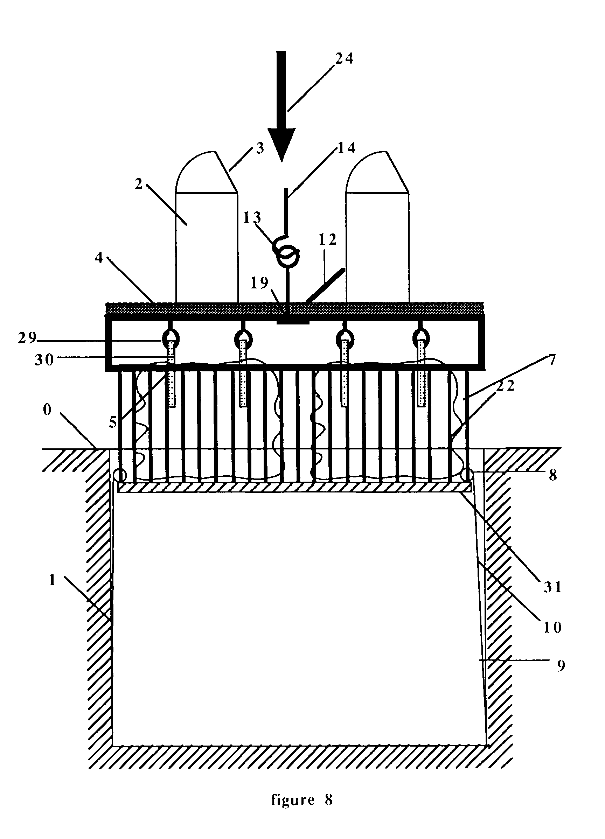

La descente (25) se poursuit (figure 8), jusqu'à ce que la structure porteuse (5) touche la barrière de sécurité (7) et par son poids, la force à descendre, les liaisons élastiques (9) s'allongeant en conséquence.

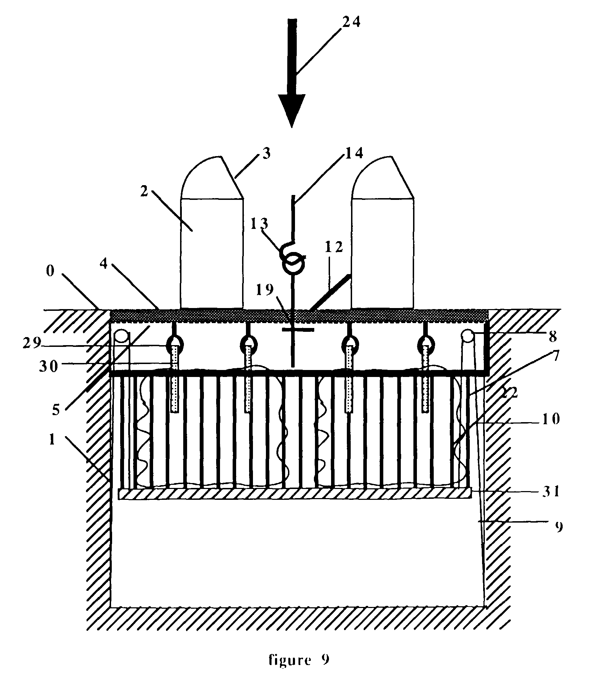

La descente (26) prend fin (figure 9), quand le plateau (4) est au niveau du sol (0). Maintenu par les liaisons élastiques (9), le plancher (31) contraint les sacs neufs et vides (22) à rester en position repliée, diminuant ainsi la hauteur de chute des bouteilles.

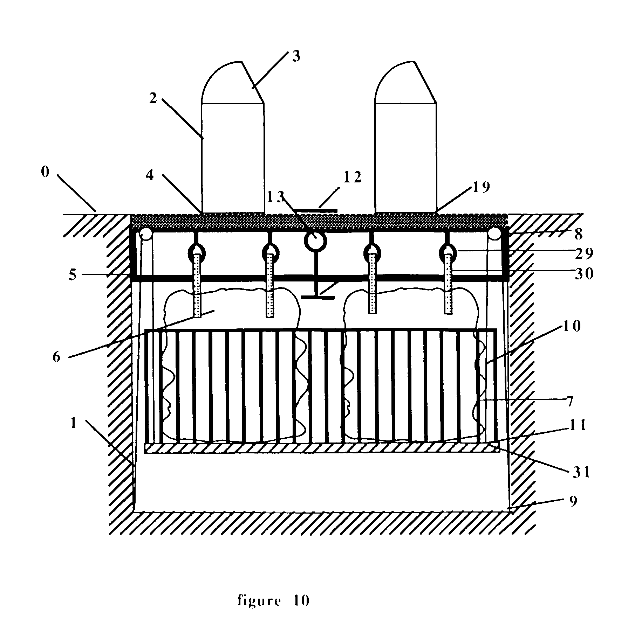

La trappe (12) est alors refermée après avoir rentré le crochet (13), le bras de levage du camion se retire (26) et le dispositif (figure 10) est à nouveau opérationnel, apte à recevoir, par l'intermédiaire du tiroir d'entrée (3) et de la trémie (2), du verre dans des sacs neufs (22).

Cette figure 10 montre au fur et à mesure du remplissage des sacs (6) que les liaisons élastiques (9) laissent descendre le plancher (31) permettant aux sacs (6) de se remplir, tout en maintenant une hauteur de chute minimale et quasi constante.

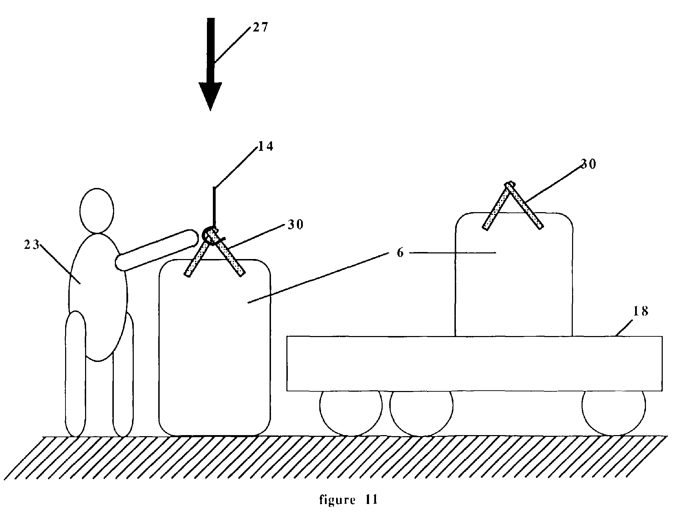

L'opérateur (23) ramène alors, (figure 11), le bras de levage de son camion (18) au-dessus des sacs pleins (6) précédemment posés sur le sol (0) et le fait descendre (27). Il accroche alors les sangles (30) du sac plein (6) au crochet de manutention (14). Le sac plein (6) est alors déposé dans le camion (18), sans y être vidé, donc sans fate ni bruit ni casse supplémentaire.

L'engin de transport (18) quitte (28) alors les lieux afin de finir sa tournée puis de rejoindre un centre de regroupement ou de tri du verre, où les sacs pleins (6) seront déposés et entreposés, toujours sans y être vidés.

Le vidage des sacs pleins (6) ne s'effectuera qu'au moment du tri, directement au-dessus d'une table de tri,
(i) par ouverture, au cutter, du sac, dans le cas des sacs jetables,
(ii) par renversement du sac, dans le cas des sacs permanents récupérables.

Les jus contenus dans les sacs (6) s'évacuent à cet instant.

Préférentiellement, ces sacs (6 et 22) sont étanches, afin de contenir les jus résiduels des bouteilles. Ces jus sont donc transportés jusqu'au centre de tri, évitant ainsi toute accumulation dans les fosses (1). Celles-ci étant construites sous forme de cuve plastique sont aisément nettoyables, au cas où d'éventuelles fuites auraient eu lieu.

La figure 13 montre le détail de montage d'un des crochets de sécurité (29) pour chaque sac (6 ou 22) suspendu par sa sangle (30). Celui-ci est monté sur un bras de levier (34) pivotant autour d'un point (33) solidaire d'un support (32), lui-même solidaire de la structure porteuse (5) et du plateau (4).

L'autre extrémité du bras de levier est retenu par un ressort taré (35) travaillant en compression et permettant le mouvement d'un indicateur gradué (36), visible de l'extérieur, soit sur le plateau (4) soit sur les trémies (2).

Avec un débattement (37) du crochet très faible, de l'ordre du centimètre et un bras de levier d'un rapport typique de dix, cela conduit à un débattement (38) de l'ordre de dix centimètres, très suffisant pour permettre un affichage (36) efficace du taux de remplissage des sacs (6). Il va de soi que le choix du ressort (35) tient compte du poids des sacs (6) pleins et des forces provenant des liaisons élastiques (10).

On comprend ainsi que la mise en oeuvre de ce procédé constitue principalement pour les collectivités locales, agissant directement ou par l'intermédiaire de concessionnaires, une avancée spectaculaire dans les solutions de collecte sélective du verre, tout en améliorant très efficacement la qualité de vie des citoyens.

En effet, cette solution permet de mettre à la disposition des habitants d'une ville un nombre très important de conteneurs de collecte, donc à proximité immédiate des habitants, sans offusquer la vue et l'odorat, ni faire prendre des risques considérables en cas de terrorisme urbain.

De plus, ce procédé permet d'alimenter aisément des chaînes de tri de verre, par des calcins de très forte granulométrie, conduisant à une amélioration significative de la rentabilité économique de la filière.

Et comme évoqué précédemment, ce procédé et ce dispositif peuvent également être mis en oeuvre pour tout type de déchets.

Enfin, bien que présentant un moindre intérêt ergonomique, ce procédé peut également s'appliquer à des conteneurs placés sur le sol et non plus enterrés, voire préférentiellement semi-enterrés de manière à ce que les trous d'introduction des déchets se situe à une hauteur compatible des enfants, des vieillards et des handicapés .

## Revendications

1. Procédé, consistant à récupérer les déchets dans un sac souple (6 et 22), caractérisé en ce qu'il consiste, successivement,
(i) à accrocher un sac souple vide (22) à une structure porteuse (5) munie de crochets de sécurité (29), l'un d'entre eux étant équipé d'un peson (32 à 35),
(ii) à disposer sous le sac (22 ou 6) d'un plancher (31), attiré vers le haut par des liaisons élastiques (10), afin qu'elles contraignent en permanence le sac (22 ou 6) à se replier sur lui-même,
(iii) à sortir le sac plein (6) et à le poser au sol (0) sans le vider, puis à le remplacer par un sac vide (22) et à replacer l'ensemble dans sa position d'origine,
(iiii) à se saisir du sac plein (6) déposé au sol (0) sans avoir été vidé, puis à le poser sur un engin de transport (18), toujours sans le vider, puis à le transporter ainsi vers une centre de traitement,
(iiiii) à ne vider le sac plein (6) qu'une fois rendu dans le centre de traitement du déchet recueilli,
*(de sorte que, dans le cas de la collecte de verre, soit obtenu, premièrement, une réduction significative du bruit de casse, deuxièmement, une augmentation significative de la taille du calcin et troisièmement un affichage permanent du taux de remplissage dudit sac).*

2. Dispositif de mise en oeuvre du procédé, selon la revendication 1, permettant l'affichage permanent (36) du taux de remplissage desdits sacs (6 et 22), grâce à l'emploi d'un dispositif de peson (32 à 35) intégré à l'un des crochets de sécurité (29), lesdits crochets de sécurité (29) solidaires d'une structure porteuse (5) servant à l'accrochage et au décrochage desdits sacs (6 et 22) par leurs sangles (30).

3. Dispositif de mise en oeuvre du procédé, selon la revendication 1, adapté à la collecte des bouteilles de verre, dans lequel un plancher (31) attiré vers le haut par des liaisons élastiques (10), fixées au plus bas (9) de la fosse (1), afin qu'elles contraignent en permanence les sacs (22 ou 6) à se replier sur eux-mêmes, afin de limiter la hauteur de chute des bouteilles et réduire ainsi et le bruit et la casse.

4. Dispositif de mise en oeuvre du procédé, selon la revendication 1, adapté à la collecte des bouteilles de verre, dans lequel le sac (6 et 22) est étanche, afin de recueillir les jus résiduels.

5. Dispositif de mise en oeuvre du procédé, selon la revendication 1, adapté aux conteneurs enterrés, dans lequel une barrière de sécurité (7) solidaire du plancher (31) apparaît automatiquement quand le plancher (31) remonte en position maximale, afin d'interdire l'accès à ce plancher (31) pour des raisons de sécurité.
